# EUROPEAN PATENT SPECIFICATION

(11) **EP 3 746 648 B1**
(45) Date of publication and mention of the grant of the patent: **22.12.2021**
(21) Application number: 19702229.6
(22) Date of filing: 25.01.2019
(51) Int. Cl.: F02C 6/16, F28D 20/00

(54) **ENERGY STORAGE DEVICE AND SYSTEM**
ENERGIESPEICHERVORRICHTUNG UND SYSTEM
DISPOSITIF ET SYSTÈME DE STOCKAGE D'ÉNERGIE

(30) Priority: 31.01.2018 WO PCT/EP2018/052377
(43) Date of publication of application: 09.12.2020
(73) Proprietor: E2S POWER AG, 8832 Willen b. Wollerau (CH)
(72) Inventor: SAVIC, Sasha, 5430 Wettingen (CH)
(74) Representative: Rutz, Andrea
(86) International application number: PCT/EP2019/051823
(87) International publication number: WO 2019/149623

(56) References cited:
- EP-A2- 2 559 881
- WO-A1-2013/152429
- US-A1- 2004 148 922
- US-A1- 2015 167 489

## Description

### TECHNICAL FIELD

The present invention concerns an energy storage device for storing energy in the form of both pressurized gas and thermal energy. The invention also concerns an energy storage system comprising such an energy storage device.

### PRIOR ART

For generating electricity, renewable sources such as wind and solar power are increasingly used. The problem, however, very often associated with renewable energy sources is the continuous availability of the generated electric power. For example, wind has an intermittent nature and is not blowing constantly for 24 hours and seven days a week. Solar energy is only available during daylight and is highly dependent on weather conditions, in particular the amount of clouds. Therefore, to make renewable energy sources more attractive and to increase the availability of the electric energy generated from such sources, energy needs to be stored. Today, there are different energy storage technologies available, ranging from batteries, pump storage systems, compressed air storages and various versions of energy storage using heat, either at high or at low end. By means of these energy storage technologies, energy is stored in the form of e.g. thermal energy, pressurized air or chemical energy in times when a surplus of the renewable source is available and is later converted to electric energy and used during times of high demand and/or low availability of the renewable source.

The main issues that today's energy storage systems are facing are their efficiency and their relatively low energy storage density (stored energy per unit of surface or volume).

WO 2004/072452 A1 discloses a combined thermal and compressed air storage system in which air can be pressurized and stored in a pressure tank. For discharging, the compressed air is guided through a thermal storage unit and to a gas turbine. This document discloses an energy storage device according to the preamble of claim 1.

DE 10 2011 112 280 A1 and US 2012/0085087 A1 disclose energy storage systems in which compressors are arranged in series with heat storage devices. An air storage device is provided in both cases for storing compressed air.

DE 44 10 440 A1 is directed to a compressed air storage system in which electricity is used during times of low demand to pressurize air by means of compressors. The pressurized air is stored in a storage receptacle. During times of high demand, the pressurized air is used to drive expansion turbines.

In WO 2016/176174 A1, a thermal storage system is disclosed in which air that has been pressurized by a multistage compressor is heated up in an electrically heated thermal storage device before being guided into a fuel-powered turbine.

CN 103353060 A discloses the arrangement of a heat storage device within an air storage device. Thermal energy of pressurized air stored in the air storage device is automatically transferred to the heat storage device and vice versa.

### SUMMARY OF THE INVENTION

It is an object of the present invention to provide an energy storage device for storing energy in the form of thermal energy and of compressed gas, which is both efficient and has a low energy storage density.

This object is solved by the energy storage device as claimed in claim 1. Further embodiments of the device are provided in dependent claims 2 to 5. Energy storage systems comprising such an energy storage device are claimed in claims 6 and 16, and further embodiments of this energy storage system are provided in dependent claims 7 to 15.

Thus, the present invention provides an energy storage device comprising
a gas receptacle for storing pressurized gas,
at least one thermal storage element for storing thermal energy, and
one or several electrical heating devices, in particular one or several electrical heating coils, for heating the at least one thermal storage element by means of electrical energy.

The at least one thermal storage element and the one or several electrical heating devices are arranged within the gas receptacle, such that the pressurized gas surrounds the at least one thermal storage element, when the pressurized gas is stored in the gas receptacle.

The arrangement of the at least one thermal storage element within the gas receptacle allows the storage of both thermal energy and compressed gas within a single compact device. By means of the one or several electrical heating devices, the at least one thermal storage element can be heated, within certain limits, to an arbitrary high temperature. By surrounding the at least one thermal storage element, the pressurized gas serves as an additional isolation for the at least one thermal storage element, in order to keep the thermal energy inside the energy storage device. On the other hand, with such an arrangement, a certain temperature of the pressurized gas is always maintained within the energy storage device, such that the pressurized gas does not have to be preheated for being used e.g. to drive a turbine. It is even possible to heat up the pressurized gas stored within the gas receptacle by means of heating up the at least one thermal storage element using the one or several electrical heating devices.

The gas receptacle usually comprises at least one gas inlet line and at least one gas outlet line. Preferably, an inlet valve is provided for each gas inlet line and an outlet valve for each gas outlet line, in order to be able to shut-off the respective lines. If all of these inlet and outlet valves are in their closed position, the gas receptacle is preferably closed in a gas-tight manner, such that the pressurized gas remains within the receptacle without any substantial pressure drop during a plurality of hours or even days.

Each of the at least one thermal storage elements advantageously comprises a solid state storage media.

In order to have a good thermal storage capacity, the at least one thermal storage element is preferably made of graphite to at least 60 wt.-%, preferably to at least 80 wt.-%, more preferably to at least 90 wt.-% and most preferably to 100 wt.-%. In this case, the energy storage device is preferably adapted to be used in a closed loop arrangement and in combination with an inert gas.

In order to guarantee a safe function, the at least one thermal storage element is preferably made of sand, stone and/or pebbles. In this case, air can be used as the gas to be pressurized and the energy storage device is preferably adapted to be used in an open loop arrangement, in which fresh air is guided from the atmosphere to the compressor, in order to be pressurized.

In a particularly preferred embodiment, however, the at least one thermal storage element forms a miscibility gap phase system and is in particular made of a miscibility gap alloy. A thermal storage element according to this particularly preferred embodiment has additional and higher heat storage capacity. Examples of possible miscibility gap alloys are ferromagnesium (FeMg), ferrocupper (FeCu) and ferroaluminium (FeAl).

In order to achieve an efficient isolation, the one or several thermal storage elements are preferably each completely arranged within the gas receptacle. Thus, preferably each of the thermal storage elements is completely surrounded by the pressurized gas, when the pressurized gas is stored in the gas receptacle.

The gas receptacle and advantageously the entire energy storage device can have the overall shape of one or several tubes. The construction of an energy storage device having a gas receptacle of this shape is particularly simple in particular as concerns pressure issues.

The one or several electrical heating devices are advantageously resistive heaters in the form of e.g. electric coils. In order to achieve an efficient heating, each of the electrical heating devices preferably closely surrounds one or several of the thermal storage elements. The electrical heating devices can also reach into the inside of one or several of the thermal storage elements.

In a preferred embodiment, the energy storage device comprises a plurality of thermal storage elements and a plurality of electrical heating devices, wherein each of the electrical heating devices is associated with one of the thermal storage elements. Thus, in such an embodiment each of the electrical heating devices is adapted to heat up one of the thermal storage elements. In this way, each of the thermal storage elements can arbitrarily be heated to a desired temperature.

In another, also preferred embodiment the energy storage device comprises a plurality of thermal storage elements that can be heated by the same electrical heating device. Thus, a single electrical heating device serves to heat up more than one of the thermal storage elements. Such an embodiment has a simplified and thus cheaper construction.

Furthermore, the present invention is directed to an energy storage system comprising at least one energy storage device as explained above. The at least one energy storage device comprises a gas receptacle, at least one thermal storage element arranged within the gas receptacle and one or several electrical heating devices for heating the at least one thermal storage element by means of electrical energy during an energy charging process. The energy storage system also comprises a compressor for pressurizing gas, in order to store the pressurized gas in the gas receptacle of the at least one energy storage device during the energy charging process. Additionally, the energy storage system comprises a turbine, i.e. preferably an expansion turbine, for generating electrical energy by means of the pressurized gas stored in the gas receptacle and by means of the thermal energy stored by the at least one thermal storage element in an energy discharging process.

Thus, in the energy charging process, the at least one thermal storage element is heated up by means of the one or several electrical heating devices. For this purpose, the one or several electrical heating devices preferably comprise an electrical grid connection, in order to be connected to an electric power supply. At the same time as the at least one thermal storage element is heated up and/or before and/or after the heating up of the at least one thermal storage element, but still during the energy charging process, gas can be pressurized by means of the compressor, in order to be stored in the gas receptacle.

Thus, after completion of the energy charging process, energy is stored in the at least one energy storage device in the form of both thermal energy and compressed gas.

In the energy discharging process, the stored energy is converted into electrical energy by means of the turbine. In doing so, the compressed gas and the thermal energy stored by the at least one energy storage device are used for driving the turbine. Since both compressed gas and thermal energy are available, the turbine can first advantageously be accelerated up to its rotational working speed by means of the compressed gas, which is already preheated due the storage in close vicinity to the thermal storage element(s). No electrical energy from the grid is needed in the energy discharging process to accelerate the turbine. Thus, the energy storage system is advantageously adapted to use pressurized gas stored in the gas receptacle to start-up the turbine at the beginning of the energy discharging process. Once the turbine has reached its rotational working speed, energy can then be transferred from the at least one thermal storage element to the working media, i.e. the gas, which is guided through the at least one energy storage device and to the turbine. Electrical energy can then be generated by means of a usual generator coupled to the turbine.

In one embodiment, an inert gas can be used as the gas to be pressurized by the compressor and to be stored in the gas receptacle. In this case, the energy storage system preferably comprises a closed loop arrangement for guiding the inert gas from the compressor via the gas receptacle to the turbine and from the turbine back to the compressor. Thus, the system is preferably designed such that the inert gas, i.e. the working media, circulates in a closed loop during the energy charging and discharging processes. Such an embodiment with an inert gas circulating in a closed loop has the advantage that e.g. thermal storage elements made of graphite can be used in the energy storage device(s), which allows the thermal storage elements to be heated up to more than 1000 °C.

In another embodiment, air can be used as the gas to be pressurized by the compressor and to be stored in the gas receptacle. In this case, the energy storage system preferably comprises an open loop arrangement for guiding fresh air from the atmosphere to the compressor, in order to be pressurized by the compressor and to be stored in the form of pressurized air in the gas receptacle, and for guiding the pressurized air from the gas receptacle via the turbine back to the atmosphere. Such an embodiment with air being used as the working media has advantages with regard to safety and costs of the system.

Particularly preferred is an embodiment in which the energy storage system is adapted to work combustion-free. By means of using the pressurized gas for accelerating the turbine and using the thermal energy from the thermal storage element(s) for driving the turbine after having reached its rotational working speed, the provision of a combustion-free system is easily possible. By using the pressurized gas for starting-up the turbine, it is also possible to use existing gas turbines with relatively minor retrofits. Existing starting and synchronizing devices can be used. In a combustion-free system, there are no problems related to e.g. flashback which can limit the temperature levels in conventional gas turbines operating with sequential combustion. Also, there are no issues with potential combustion pulsations, emissions, tuning etc. Alternatively, it is of course also possible to use the energy storage device within a combustion system.

In a preferred embodiment, the energy storage device is arranged in series between the compressor and the turbine. Thus, the gas is first pressurized by the compressor and is then guided into the energy storage device, where it can be stored for later use. From the energy storage device, the pressurized gas can then be guided to the turbine, in order to drive the turbine and to generate electric energy.

Also preferred is an embodiment in which the energy storage system comprises at least two energy storage devices, wherein a first energy storage device is arranged in series between the compressor and the turbine, and wherein a second energy storage device is arranged in series after the turbine or after a first pressure stage of the turbine. Thus, the gas is first pressurized by the compressor, and then streams from the compressor to the first energy storage device and from there via the turbine or the first pressure stage of the turbine to the second energy storage device. The pressurized gas in the second energy storage device can serve e.g. to drive a second pressure stage of the turbine or a further turbine or it can serve to produce steam in a heat recovery steam generator of a combined cycle system for driving a steam turbine.

In certain embodiments, the energy storage system can even comprise several turbines and/or the turbine can comprise several pressure stages, and the energy storage system can additionally comprise more than two energy storage devices. In this case, the turbines and/or the pressure stages of the turbine are preferably arranged such in series with the energy storage devices, that each of the turbines and/or each of the pressure stages of the turbine is arranged between two energy storage devices.

In all of the embodiments mentioned, the energy storage system can be, but does not need to be, a combined cycle system with a steam turbine that can be driven by steam generated by means of the gas exhausted by the turbine.

The energy storage system can comprise several compressors and/or the compressor can comprise several pressure stages, wherein the energy storage system additionally comprises a freezer for generating ice during the energy charging process and an intercooler for cooling the gas between the compressors and/or between the pressure stages of the compressor by means of the ice during the energy discharging process, in order to improve the efficiency of the system.

The compressor is preferably formed by a turbine that is attached to the same shaft to which also the turbine is attached.

### SHORT DESCRIPTION OF THE FIGURES

Preferred embodiments of the invention are described in the following with reference to the drawings, which only serve for illustration purposes, but have no limiting effects. In the drawings it is shown:
- Fig. 1: a schematic view of an energy storage device according to a first inventive embodiment;
- Fig. 2: a schematic view of an energy storage device according to a second inventive embodiment;
- Fig. 3: a schematic view of an energy storage system according to a first inventive embodiment, with an open loop arrangement;
- Fig. 4: a schematic view of an energy storage system according to a second inventive embodiment, with an open loop arrangement and with two compressors and a compessor intercooler;
- Fig. 5: a schematic view of an energy storage system according to a third inventive embodiment, with a closed loop arrangement and with two compressors and a cooling system;
- Fig. 6: a schematic view of an energy storage system according to a fourth inventive embodiment, with an open loop arrangement and a compressor intercooler and being coupled to a district heating system;
- Fig. 7: a schematic view of an energy storage system according to a fifth inventive embodiment, with a closed loop arrangement and being in the form of a combined cycle system;
- Fig. 8: a schematic view of essentially the same energy storage system as shown in Fig. 7, but comprising a blower for using the heat recovery steam generator with switched-off turbine;
- Fig. 9: a schematic view of a further inventive energy storage system in which a gas turbine is connected to the closed loop of a steam power station, with an energy storage device according to the invention being integrated therein; and
- Fig. 10: a schematic view of another further inventive energy storage system in which a coal fired power plant is connected to the closed loop of a steam power station, with an energy storage device according to the invention being integrated therein.

### DESCRIPTION OF PREFERRED EMBODIMENTS

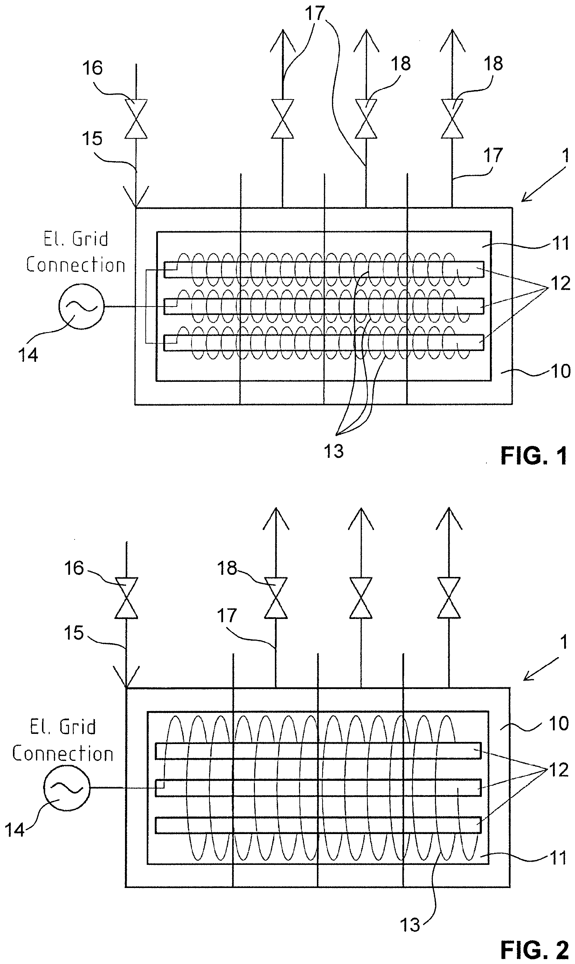

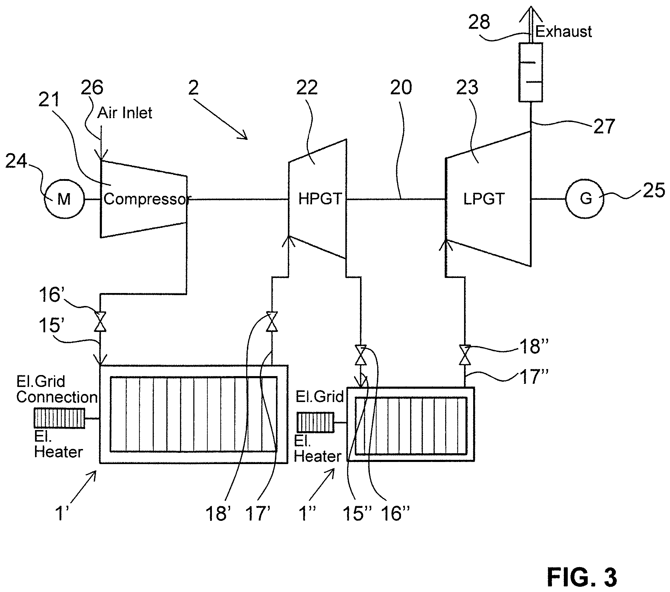

Figures 1 and 2 schematically show two embodiments of an inventive energy storage device 1. Figures 3 to 7 show different embodiments an inventive energy storage system comprising at least one inventive energy storage device. The energy storage devices used in the energy storage systems of figures 3 to 7 are preferably designed in accordance with the energy storage devices 1 shown in figures 1 and 2.

In the following, features having the same or a similar design and/or the same or a similar function are referred to by means of the same reference numerals or by reference numerals that only differ from each other by a prime symbol ('), a double prime symbol (") or a triple prime symbol ('").

The energy storage device 1 as shown in figure 1 comprises a gas receptacle 10 which is sealable so as to be gas-tight, in order to store pressurized gas, in particular a pressurized inert gas or pressurized air, within an inner space 11. The energy storage device 1 as a whole has a compact design with the gas receptacle 10 and only a few connections 15, 17 and 14 for the gas and electricity.

For admitting pressurized gas into the inner space 11 of the gas receptacle 10, the energy storage device 1 comprises an inlet line 15 with an inlet valve 16. Depending on the state of the inlet valve 16, gas can be let into the inner space 11 through the inlet line 15 or the passage for the gas through the inlet line 15 is shut off.

For admitting the stored pressurized gas out of the inner space 11 of the gas receptacle 10, the energy storage device 1 comprises one or more, in the present case three, outlet lines 17 each of them comprising an outlet valve 18. Depending on the state of the outlet valves 18, gas can be let out of the inner space 11 or the passages for the gas through the outlet lines 17 are shut off.

Thus, the inlet valve 16 and the outlet valves 18, when all being in their closed state, can together act as a lock for the pressurized gas being stored in the inner space 11 of the gas receptacle 10. There are no further openings for the pressurized gas to possibly escape from the inner space 11 except through inlet line 15 and outlet lines 17.

Within the inner space 11 of the gas receptacle 10, several thermal storage elements 12 are arranged in such a way that each of these thermal storage elements 12 is completely surrounded by the pressurized gas stored within the energy storage device. In doing so, the pressurized gas comes in contact with each of the thermal storage elements 12 on all sides thereof.

The surrounding by the pressurized gas contributes, on the one hand, to the thermal isolation of the thermal storage elements 12. On the other hand, due to the direct contact and the surrounding of the thermal storage elements 12, the pressurized gas is kept at about the temperature of the thermal storage elements 12 during storage, which is advantageous for later use of the pressurized gas in the energy discharging process, e.g. for accelerating a turbine.

The thermal storage elements 12 have a bar-like shape and are preferably made of graphite to at least 60 wt.-%, preferably to at least 80 wt.-%, more preferably to at least 90 wt.-%, if the pressurized gas to be stored is an inert gas. Particularly preferred are embodiments in which the thermal storage elements 12 form a miscibility gap phase system and are advantageously made from a miscibility gap alloy. If air is used as the gas to be stored, however, sand, pebbles or stone can be used for the thermal storage elements 12, because these materials have a high thermal capacity, but do not react with air.

In order to heat up the thermal storage elements 12 during an energy charging process, electrical heating devices 13 in the form of electrical heating coils are provided. Each of the electrical heating devices 13 is a resistive heater that helically surrounds one of the thermal storage elements 12 along of its essentially entire length. By means of an electrical grid connection 14, the electrical heating devices 13 can be connected to an electric power supply.

Figure 2 shows a second embodiment of an inventive energy storage device 1 which differs from the one of figure 1 by comprising only a single electrical heating device 13. This electrical heating device 13, however, surrounds all of the thermal storage elements 12 of the energy storage device. Thus, a single electrical heating device 13 serves to heat up all thermal storage elements 12 in this case.

Figure 3 shows a first embodiment of an inventive energy storage system comprising two energy storage devices 1, a high pressure energy storage device 1' and a medium pressure energy storage device 1", arranged in series with a compressor 21, a high pressure turbine 22 and a low pressure turbine 23. The high pressure energy storage device 1' is arranged between the compressor 21 and the high pressure turbine 22 and is connected to the compressor 21 via an inlet line 15' with an inlet valve 16' and to the high pressure energy storage device via an outlet line 17' with an outlet valve 18'. The medium pressure energy storage device 1" is arranged in series between the turbines 22 and 23 and is connected to them via an inlet line 15" with an inlet valve 16" and an outlet line 17" with an outlet valve 18", respectively.

The compressor 21, the high pressure turbine 22 and the low pressure turbine 23 are all attached in a torque proof manner to a common shaft 20 and together form a compressor-/turbine-arrangement 2. Also connected to the shaft 20 is a motor 24 for driving the compressor 21 and a generator 25 for generating electric energy using the rotation movement of the shaft 20 by the turbines 22, 23.

For the motor 24 and the generator 25, state-of-the-art devices can be used. The motor 24 can be e.g. a simple electric motor connected to an electric power supply or it can also be e.g. a wind turbine for converting wind energy into rotational energy of the shaft 20. The generator 25 can be a usual electric generator.

The energy storage system as shown in figure 3 has an open loop arrangement, meaning that during an energy charging process, fresh air from the atmosphere is aspirated through an gas inlet 26 into the compressor 21 in which it is pressurized. From the compressor 21, the pressurized air is guided into high pressure energy storage device 1' via inlet line 15' and inlet valve 16', in order to be stored within the high pressure energy storage device 1'. At the same time, further pressurized air reaches a medium pressure energy storage device 1" via the high pressure device 1' and the high pressure turbine 22, in order to be stored within the medium pressure energy storage device 1".

Furthermore, during the energy charging process, the thermal storage elements 12 of the energy storage devices 1' and 1" are heated up by means of the electrical heater(s) 13.

After completion of the energy charging process, the energy storage system can adopt a storage state in which all inlet and outlet valves 16', 18', 16" and 18" are closed, such that the pressurized gas cannot escape from the energy storage devices 1' and 1". At the same time, thermal energy is stored by the thermal storage elements 12 of the energy storage devices 1' and 1".

During an energy discharging process, outlet valves 18' and 18" are opened in a controlled manner, in order to start-up and accelerate rotation of the expansion turbines 22 and 23 and, thus, of the entire compressor-/turbine-arrangement 2. Thus, the start-up of the turbines 22 and 23 can be carried out by means of only the energy of the pressurized gas stored in the energy storage devices 1' and 1". No combustion or any electric assistance is needed for accelerating the turbines 22, 23. In order to aspirate further fresh air through gas inlet 26, inlet valves 16' and 16" can also be opened. After passing the low pressure turbine 23, the air is discharged from the system through an gas outlet 27 and an exhaust 28 into the atmosphere.

Once the turbines 22, 23 have reached their rotational working speeds, they can be further driven by means of the thermal energy stored in the thermal storage elements 12 of energy storage devices 1' and 1". In doing so, thermal energy is transferred from the thermal storage elements 12 to the gas passing through energy storage devices 1' and 1". The heated up and, thus, pressurized gas drives expansion turbines 22 and 23 and, in this way, keeps the system in its steady-state for generating electric energy by means of the generator 25.

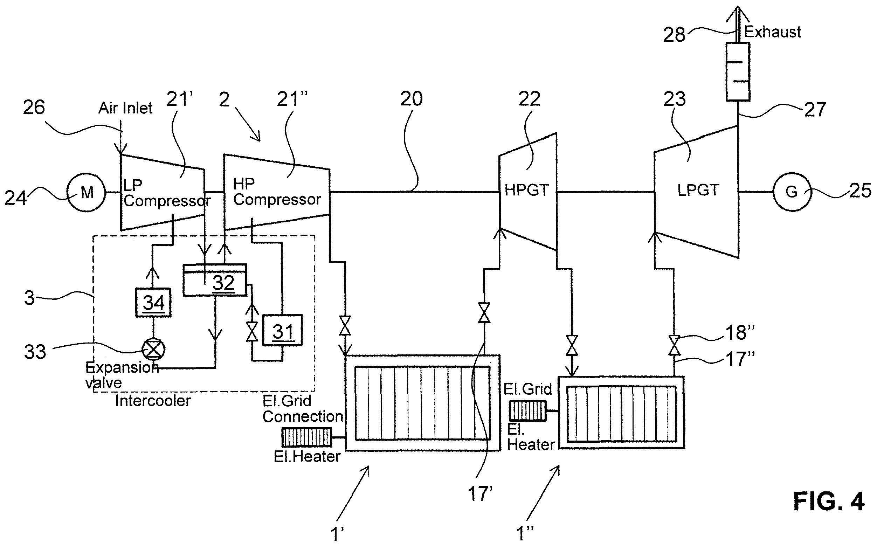

In figure 4, a second inventive embodiment of an electric storage system is represented. The design of the system is basically the same as the one of figure 3, except that there are two compressors 21' and 21" instead of only one compressor 21. Furthermore, for improving the efficiency of the two compressors 21' and 21", a compressor intercooler 3 is provided. The two compressors 21' and 21" are formed by a low pressure compressor 21' and a high pressure compressor 21" which are arranged in series and are both attached to the shaft 20 in a torque proof manner.

For the compressor intercooler 3, a state-of-the-art device can be used comprising a cooler 31 that is connected, as it is shown in figure 4, via a valve to a flash chamber 32, which in turn is connected via an expansion valve 33 to an evaporator 34. The cooler 31 is connected to the high pressure compressor 21" and the evaporator 34 to the low pressure compressor 21'. After leaving the low pressure compressor 21', the air is cooled down within flash chamber 32 before streaming into high pressure compressor 21".

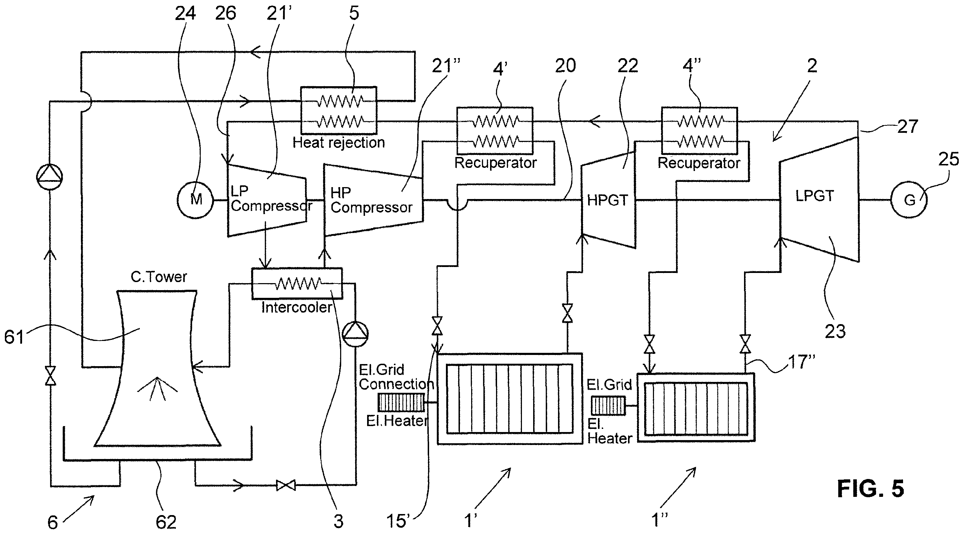

Figure 5 shows another embodiment of an inventive electric storage system. In this case, the electric storage system has a closed loop arrangement, meaning that no fresh air is aspirated from the atmosphere and that no air or gas is exhausted into the atmosphere. It is noted, however, that the fundamental elements and the basic design of the system, as concerns the energy storage devices 1', 1" and the compressor-/turbine-arrangement, are essentially the same as in the embodiment of figure 4.

Due to the closed loop arrangement, the gas leaving the low pressure turbine 23 through outlet 27 is not exhausted into the atmosphere, but lead back to the low pressure compressor 21' via gas inlet 26. Since the system is designed such that the circulating gas cannot escape into the atmosphere, it is possible to use an inert gas as the gas to be pressurized. The inert gas, due to its non-reactive character, allows the use of e.g. solid state graphite bars for the thermal storage elements 12 of the energy storage devices 1' and 1", which greatly improves the thermal storage capacity of the system.

On its way back from the low pressure turbine 23 to the low pressure compressor 21', the gas is guided through two recuperators 4', 4". In these recuperators 4', 4", the high thermal energy of the gas leaving the low pressure compressor 21' is transferred to the gas which is about to reach the energy storage devices 1' and 1" in another part of the closed loop. Thus, by means of the recuperators 4', 4" the thermal energy of the gas leaving the low pressure compressor 21' is used to pre-heat the gas on the other side of the closed loop before reaching the energy storage devices 1' and 1", which greatly improves the overall efficiency of the system. By means of a heat exchanger 5 the gas is further cooled down to a typical temperature of preferably close to 15 °C before reaching the low pressure compressor 21'.

A compressor intercooler 3 is also provided in this embodiment, in order to cool the gas between the low pressure compressor 21' and the high pressure compressor 21". In the present case, the compressor intercooler 3 has the form of a heat exchanger.

For efficiently cooling the gas streaming through the heat exchanger 5 and the intercooler 5, a cooling system 6 is provided. The cooling system 6 comprises two loops in each of which a cooling media is circulating. After the heat exchanger 5 and the compressor intercooler 3, respectively, the cooling media is cooled down in a cooling tower 61, and the condensed cooling media is collected in a condenser 62, in order to be used again for cooling the gas in the heat exchanger 5 and the compressor intercooler 3, respectively. The circulation of the cooling media can be controlled by means of valves arranged within each loop.

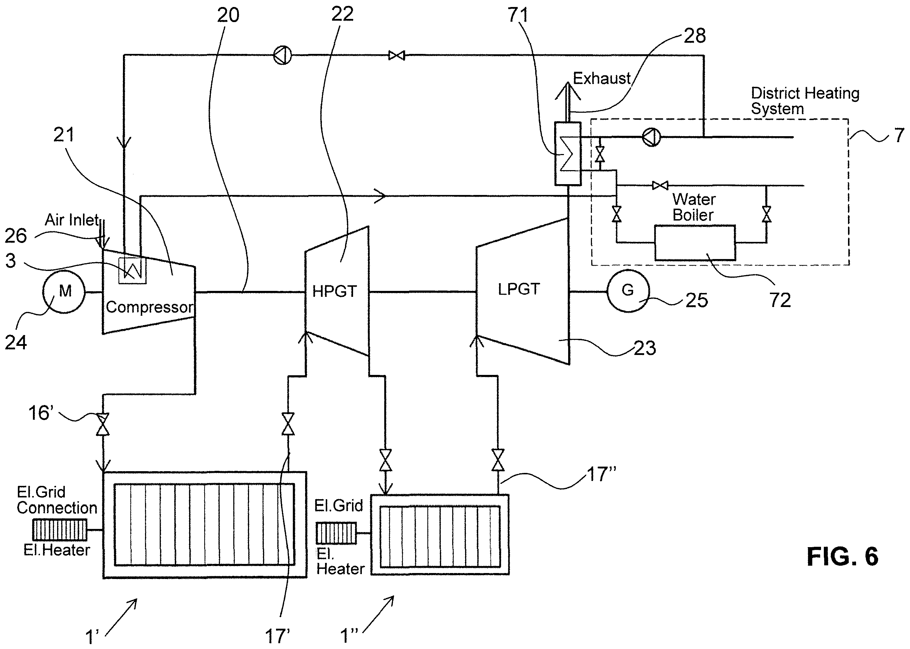

Figure 6 shows an inventive embodiment with an open loop arrangement, i.e. using air as the working gas to be pressurized. The basic design of the system is the same as the one of the embodiment shown in figure 3. In comparison to figure 3, however, an integration of the system in a district heating system 7 is shown in figure 6.

After leaving the low pressure expansion turbine 23 of the system of figure 6, the still hot air is guided through a heat exchanger 71 before being exhausted through exhaust 28. In the heat exchanger 71, thermal energy is transferred from the air to a working media of the district heating system 7. Thus, in this embodiment, the thermal energy of the exhaust air is used in the district heating system 7 for e.g. heating one or several buildings and/or water in one or several water boilers 72.

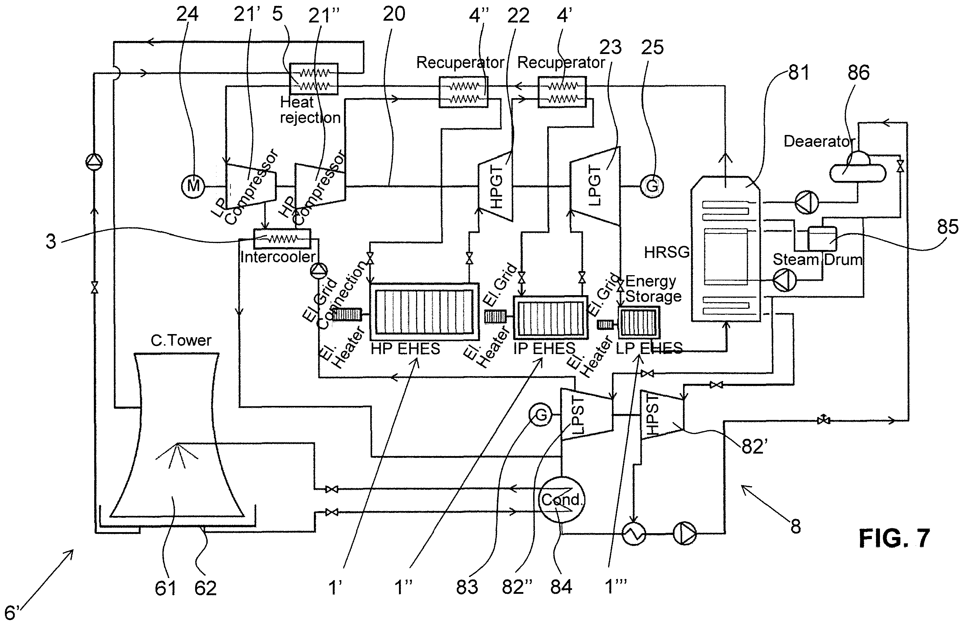

Figure 7 shows a further inventive embodiment of an energy storage system which is basically designed as the one shown in figure 5, but differs therefrom by additionally comprising a low pressure energy storage device 1"' and a heat recovery steam generator 81 through both of which the gas is guided after leaving the low pressure turbine 23 and before being lead back to the low pressure compressor 21' via recuperators 4', 4" and heat exchanger 5.

The heat recovery steam generator 81 is part of a steam power station 8 with a high pressure steam turbine 82' and a low pressure steam turbine 82". Thus, the system shown in figure 7 is a combined cycle system.

The energy storage device 1‴ is arranged in series between the low pressure turbine 23 and the heat recovery steam generator 81 and serves to store gas that is still hot and pressurized. Additionally, the energy storage device 1‴ serves to store thermal energy by means of the thermal storage elements 12 in an analogous way as in energy storage devices 1' and 1".

The energy stored by energy storage device 1‴ and/or the gas streaming through energy storage device 1‴ are used to generate hot steam in the heat recovery steam generator 81. The hot steam generated in the heat recovery steam generator 81 is then used to drive steam turbines 82', 82". By means of the rotational movement of the steam turbines 82', 82", electric energy can be generated in a generator 83. After leaving steam turbines 82', 82", the steam is condensed by means of a condenser 84 before being guided back to the heat recovery steam generator 81 via a steam drum 85 and a deaerator 86.

The cooled-down steam leaving the low pressure steam turbine 82" can be used for the compressor intercooler 3. The cooling of the condenser 84 can be carried out by means of the cooling media circulating in the cooling system 6' and being cooled by cooling tower 61.

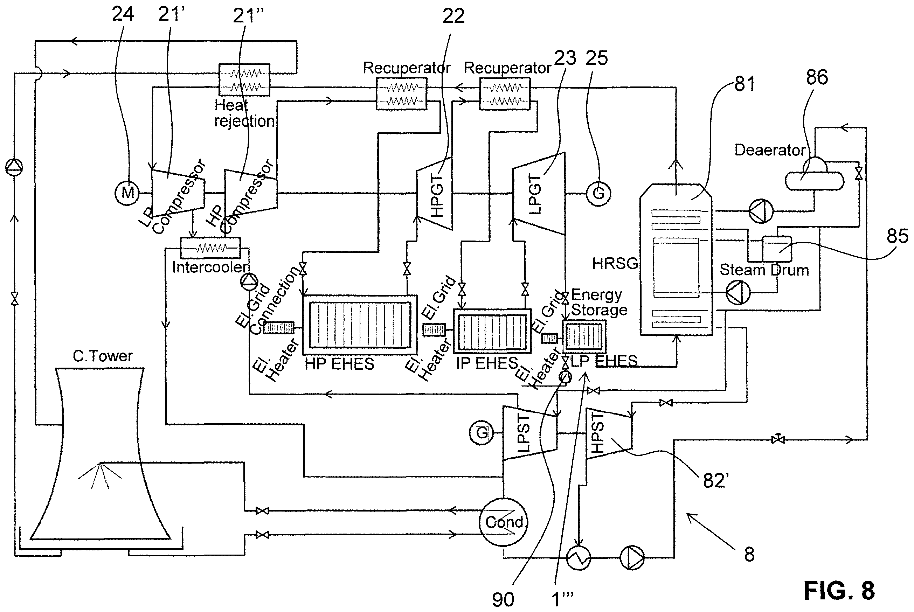

In figure 8, a variant of the embodiment of figure 7 is shown. The energy storage system as shown in figure 8 is essentially identical to the one of figure 7, but additionally comprises a blower 90 for guiding a pressurized gas, such as air, into the energy storage device 1'". Owing to the blower 90, it is possible to use the steam power station 8 with the heat recovery steam generator 81, the high pressure steam turbine 82' and the low pressure steam turbine 82" with the turbines 21', 21", 22 and 23 being completely switched off. Thus, after switching off the turbines 21', 21", 22 and 23, the thermal energy within the energy storage device 1"' can be generated via the electrical grid connection and the pressurized gas is generated by means of the blower 90 instead. Of course, it is also possible to use the blower 90 in combination with the low pressure turbine 23, e.g. if the pressure of the gas streaming into the energy storage device 1‴ is not sufficient.

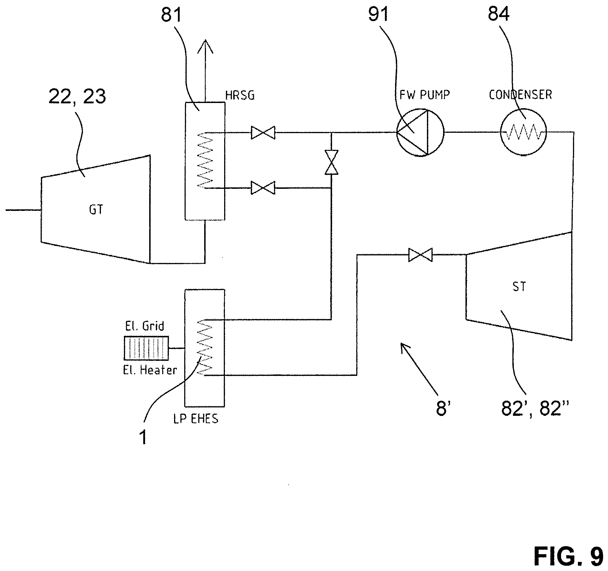

Figure 9 shows an energy storage system in which a gas turbine 22, 23 is connected to the closed loop of a steam power station 8'. The gas turbine can, but not necessarily has to comprise a high pressure turbine 22 and a low pressure turbine 23 and be part of an open loop arrangement as shown e.g. in figures 3 and 4 or be part of a closed loop arrangement as shown e.g. in figure 5. From the gas turbine 22, 23, the pressurized gas is guided into a heat recovery steam generator 81 which is part of the steam power station 8'. The steam power station 8' additionally comprises a condenser 84 and a steam turbine 82', 82" arranged in a closed loop, similar as the steam power station 8 shown in figures 7 and 8. Similar also as in the embodiments of figures 7 and 8, the steam turbine can comprise a high pressure steam turbine 82' and a low pressure steam turbine 82". A forward pump 91 is provided to circulate a fluid, e.g. water, through the closed loop of the steam power station 8'.

Also integrated in the closed loop of the steam power station 8' as shown in figure 9 is an energy storage device 1 for storing thermal energy. The thermal energy in the energy storage device 1 can additionally be generated via an electrical grid connection.

It is the particular advantage of the system as shown in figure 9 that the gas turbine 22, 23 and the heat recovery steam generator 81 can be completely disconnected from the steam turbine 82', 82" by means of valves. Using the valves, it is possible to generate a closed loop that is separate from the heat recovery steam generator 81. The steam turbine 82', 82" can then be driven exclusively by the thermal energy generated and/or stored in the energy storage device 1.

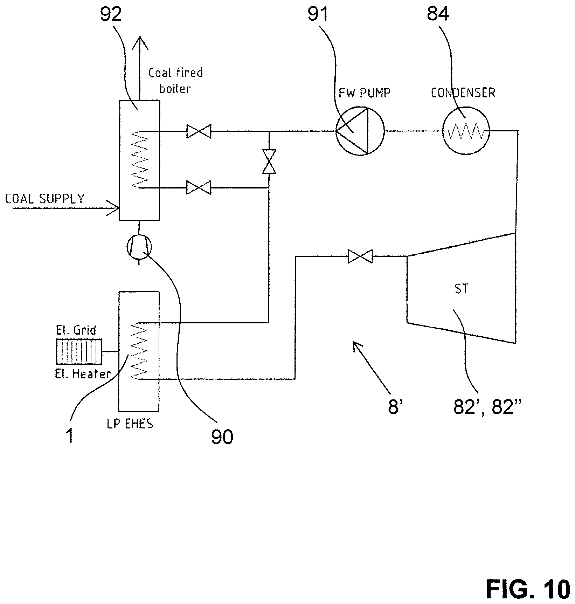

In figure 10, an energy storage system is shown which comprises the same steam power station 8' as shown in figure 9. However, in the embodiment of figure 10, the steam power station 8' is connected to a coal fired power plant of conventional design. Thermal energy produced by the coal fired power plant is used in a steam generator in the form of a coal fired boiler 92, in order to generate hot steam for driving the steam turbine 82', 82". A blower 90 can be provided, in order to guide pressurized gas, e.g. air, into the coal fired boiler 92. As in the embodiment of figure 9, the steam generator, i.e. here the coal fired boiler 92, can be disconnected, and the steam power station 8' can be driven from thermal energy stored in the energy storage device 1.

The invention is of course not limited to the preceding presented embodiments and a plurality of modifications is possible. For example, it is possible to arbitrarily combine the embodiments of figures 3 to 10. It is conceivable, for example, to design an energy storage system with an open loop arrangement as a part of a combined cycle system. Also, the compressor(s) and the turbine(s) do not necessarily have to be attached to the same shaft. Multi-shaft arrangements are possible as well. In the case of a combined cycle system, a single-shaft arrangement with one generator for both the gas and the steam turbines is possible. It would also be possible to use e.g. air as the gas to be pressurized in a system with a closed loop arrangement, which would improve the safety of the system, when being combined with non-flammable thermal storage elements that are e.g. made of sand, pebbles or stone. Furthermore, embodiments are easily conceivable that comprise one single energy storage device only. A plurality of further modifications is possible.

**REFERENCE NUMERALS**

| | | | |
|---|---|---|---|
| 1 | Energy storage device | 3 | Compressor intercooler |
| 1' | High pressure energy storage device | 31 | Cooler |
| | | 32 | Flash chamber |
| 1" | Medium pressure energy | 33 | Expansion valve |
| | storage device | 34 | Evaporator |
| 1'" | Low pressure energy storage | | |
| | device | 4', 4" | Recuperator |
| 10 | Gas receptacle | 5 | Heat exchanger |
| 11 | Inner space | | |
| 12 | Thermal storage element | 6, 6' | Cooling system |
| 13 | Electrical heating device | 61 | Cooling tower |
| 14 | Electrical grid connection | 62 | Condenser |
| 15, 15', 15" | Inlet line | | |
| 16, 16', 16" | Inlet valve | 7 | District heating system |
| 17, 17', 17" | Outlet line | 71 | Heat exchanger |
| 18, 18', 18" | Outlet valve | 72 | Water boiler |
| | | | |
| 2 | Compressor-/turbine-arrangement | 8, 8' | Steam power station |
| | | 81 | Heat recovery steam |
| 20 | Shaft | | generator |
| 21 | Compressor | 82' | High pressure steam turbine |
| 21' | Low pressure compressor | 82" | Low pressure steam turbine |
| 21" | High pressure compressor | 83 | Generator |
| 22 | High pressure turbine | 84 | Condenser |
| 23 | Low pressure turbine | 85 | Steam drum |
| 24 | Motor | 86 | Deaerator |
| 25 | Generator | | |
| 26 | Gas inlet | 9 | Blower |
| 27 | Gas outlet | 91 | Forward pump |
| 28 | Exhaust | 92 | Coal fired boiler |

## Claims

1. An energy storage device (1; 1', 1", 1"') comprising
a gas receptacle (10) for storing pressurized gas,
at least one thermal storage element (12) for storing thermal energy, and
one or several electrical heating devices (13) for heating the at least one thermal storage element (12) by means of electrical energy,
**characterized in that**
the at least one thermal storage element (12) and the one or several electrical heating devices (13) are arranged within the gas receptacle (10), such that the pressurized gas surrounds the at least one thermal storage element (12), when the pressurized gas is stored in the gas receptacle (10).

2. The energy storage device as claimed in claim 1, wherein the at least one thermal storage element (12) is made of graphite to at least 60 wt.-%, preferably to at least 80 wt.-%, more preferably to at least 90 wt.-%, and/or is made of sand, stone or pebbles.

3. The energy storage device as claimed in claim 1 or 2, wherein the at least one thermal storage element (12) forms a miscibility gap phase system and is in particular made of a miscibility gap alloy.

4. The energy storage device as claimed in one of the preceding claims, comprising a plurality of thermal storage elements (12) and a plurality of electrical heating devices (13), wherein each of these electrical heating devices (13) is associated with one of these thermal storage elements (12).

5. The energy storage device as claimed in one of claims 1 to 3, wherein one electrical heating device (13) serves to heat a plurality of thermal storage elements (12).

6. An energy storage system comprising
at least one energy storage device (1; 1', 1", 1"') as claimed in one of the preceding claims, with a gas receptacle (10), with at least one thermal storage element (12) arranged within the gas receptacle (10) and with one or several electrical heating devices (13) for heating the at least one thermal storage element (12) by means of electrical energy during an energy charging process,
a compressor (21; 21', 21") for pressurizing gas, in order to store the pressurized gas in the gas receptacle (10) of the at least one energy storage device (1; 1', 1", 1‴) during the energy charging process, and
a turbine (22, 23) for generating electrical energy by means of the pressurized gas stored in the gas receptacle (10) and the thermal energy stored by the at least one thermal storage element (12) in an energy discharging process.

7. The energy storage system as claimed in claim 6, wherein the energy storage system comprises a closed loop arrangement for guiding the gas from the compressor (21; 21', 21") via the gas receptacle (10) to the turbine (22, 23) and from the turbine (22, 23) back to the compressor (21; 21', 21"), and wherein an inert gas is preferably used as the gas to be pressurized by the compressor (21; 21', 21") and to be stored in the gas receptacle (10).

8. The energy storage system as claimed in claim 6, wherein air is used as the gas to be pressurized by the compressor (21; 21', 21") and to be stored in the gas receptacle (10), and wherein the energy storage system comprises an open loop arrangement for guiding fresh air from the atmosphere to the compressor (21; 21', 21"), in order to be pressurized by the compressor (21; 21', 21") and to be stored in the form of pressurized air in the gas receptacle (10), and for guiding the pressurized air from the gas receptacle (10) via the turbine (22, 23) back to the atmosphere.

9. The energy storage system as claimed in one of claims 6 to 8, wherein the energy storage system is adapted to work combustion-free.

10. The energy storage system as claimed in one of claims 6 to 9, wherein the energy storage system is adapted to use pressurized gas stored in the gas receptacle (10) to start-up the turbine (22, 23) at the beginning of the energy discharging process.

11. The energy storage system as claimed in one of claims 6 to 10, comprising at least two energy storage devices (1', 1", 1"'), wherein a first energy storage device (1', 1") is arranged in series between the compressor (21; 21', 21") and the turbine (22, 23), and wherein a second energy storage device (1", 1"') is arranged in series after the turbine (22, 23) or after a first pressure stage of the turbine (22, 23).

12. The energy storage system as claimed in claim 11, comprising several turbines (22, 23) and/or the turbine (22, 23) comprising several pressure stages, wherein the energy storage system additionally comprises more than two energy storage devices (1', 1", 1"'), and wherein the turbines (22, 23) and/or the pressure stages of the turbine (22, 23) are arranged such in series with the energy storage devices (1', 1", 1‴), that each of the turbines (22, 23) and/or each of the pressure stages of the turbine (22, 23) is arranged between two energy storage devices (1', 1", 1"').

13. The energy storage system as claimed in one of claims 6 to 12, wherein the energy storage system is a combined cycle system with a steam turbine (82', 82") that can be driven by steam generated by means of gas exhausted by the turbine (22, 23).

14. The energy storage system as claimed in one of claims 6 to 13, comprising several compressors (21', 21") and/or the compressor (21) comprising several pressure stages, wherein the energy storage system additionally comprises a freezer for generating ice during the energy charging process and an intercooler (3) for cooling the gas between the compressors (21', 21") or between the pressure stages of the compressor (21) by means of the ice during the energy discharging process.

15. The energy storage system as claimed in one of claims 6 to 14, wherein the compressor (21; 21', 21") is formed by a turbine that is attached to the same shaft (20) to which also the turbine (22, 23) is attached.

16. An energy storage system comprising
at least one energy storage device (1) as claimed in one of claims 1 to 5, with a receptacle (10), with at least one thermal storage element (12) arranged within the receptacle (10) and with one or several electrical heating devices (13) for heating the at least one thermal storage element (12) by means of electrical energy during an energy charging process,
a steam generator (81, 92) for generating steam, in order to store the generated steam in the receptacle (10) of the at least one energy storage device (1) during the energy charging process, and
a steam turbine (82', 82") for generating electrical energy by means of the steam stored in the receptacle (10) and the thermal energy stored by the at least one thermal storage element (12) in an energy discharging process.

## Patentansprüche

1. Eine Energiespeichervorrichtung (1; 1', 1", 1"'), aufweisend
ein Gasgefäss (10) zur Speicherung von Druckgas,
mindestens ein thermisches Speicherelement (12) zur Speicherung von thermischer Energie, und
eine oder mehrere elektrische Heizeinrichtungen (13) zur Beheizung des mindestens einen thermischen Speicherelements (12) mittels elektrischer Energie,
**dadurch gekennzeichnet, dass**
das mindestens eine thermische Speicherelement (12) und die eine oder mehreren elektrischen Heizeinrichtungen (13) innerhalb des Gasbehälters (10) angeordnet sind, so dass das Druckgas das mindestens eine thermische Speicherelement (12) umgibt, wenn das Druckgas im Gasbehälter (10) gespeichert ist.

2. Die Energiespeichervorrichtung nach Anspruch 1, wobei das mindestens eine thermische Speicherelement (12) zu mindestens 60 Gew.-%, bevorzugt zu mindestens 80 Gew.-%, noch bevorzugter zu mindestens 90 Gew.-%, aus Graphit hergestellt ist und/oder aus Sand, Stein oder Kieseln hergestellt ist.

3. Die Energiespeichervorrichtung nach Anspruch 1 oder 2, wobei das mindestens eine thermische Speicherelement (12) ein Mischungslücken-Phasensystem (engl. "miscibility gap phase system") bildet und insbesondere aus einer Mischungslücken-Legierung (eng. "miscibility gap alloy") hergestellt ist.

4. Die Energiespeichervorrichtung nach einem der vorhergehenden Ansprüche, aufweisend eine Mehrzahl von thermischen Speicherelementen (12) und eine Mehrzahl von elektrischen Heizeinrichtungen (13), wobei jede dieser elektrischen Heizeinrichtungen (13) einem dieser thermischen Speicherelemente (12) zugeordnet ist.

5. Die Energiespeichervorrichtung nach einem der Ansprüche 1 bis 3, wobei eine elektrische Heizeinrichtung (13) zur Beheizung einer Mehrzahl von thermischen Speicherelementen (12) dient.

6. Ein Energiespeichersystem, aufweisend
mindestens eine Energiespeichervorrichtung (1; 1', 1", 1‴) nach einem der vorhergehenden Ansprüchen, mit einem Gasbehälter (10), mit mindestens einem innerhalb des Gasbehälters (10) angeordneten thermischen Speicherelement (12) und mit einer oder mehreren elektrischen Heizeinrichtungen (13) zur Beheizung des mindestens einen thermischen Speicherelements (12) mittels elektrischer Energie während eines Energieladevorgangs,
einen Verdichter (21; 21', 21") zur Druckbeaufschlagung von Gas, um das unter Druck stehende Gas während des Energieladevorgangs im Gasbehälter (10) der mindestens einen Energiespeichervorrichtung (1; 1', 1", 1"') zu speichern, und
eine Turbine (22, 23) zur Erzeugung elektrischer Energie mittels des im Gasbehälter (10) gespeicherten Druckgases und der in dem mindestens einen thermischen Speicherelement (12) gespeicherten thermischen Energie in einem Energieentladevorgang.

7. Das Energiespeichersystem nach Anspruch 6, wobei das Energiespeichersystem eine geschlossene Kreislaufanordnung zur Führung des Gases vom Verdichter (21; 21', 21") über den Gasbehälter (10) zur Turbine (22, 23) und von der Turbine (22, 23) zurück zum Verdichter (21; 21', 21") aufweist, und wobei als das vom Verdichter (21; 21', 21") unter Druck zu setzende und im Gasbehälter (10) zu speichernde Gas vorzugsweise ein Inertgas verwendet wird.

8. Das Energiespeichersystem nach Anspruch 6, wobei Luft als das von dem Verdichter (21; 21', 21") unter Druck zu setzende und in dem Gasbehälter (10) zu speichernde Gas verwendet wird, und wobei das Energiespeichersystem eine offene Kreislaufanordnung zum Leiten von Frischluft aus der Atmosphäre zu dem Verdichter (21; 21', 21") aufweist, um von dem Verdichter (21; 21', 21") unter Druck gesetzt und in Form von Druckluft in dem Gasbehälter (10) gespeichert zu werden, und um die Druckluft von dem Gasbehälter (10) über die Turbine (22, 23) zurück in die Atmosphäre zu leiten.

9. Das Energiespeichersystem nach einem der Ansprüche 6 bis 8, wobei das Energiespeichersystem dazu ausgebildet ist, verbrennungsfrei zu arbeiten.

10. Das Energiespeichersystem nach einem der Ansprüche 6 bis 9, wobei das Energiespeichersystem dazu ausgebildet ist, dass es das im Gasbehälter (10) gespeicherte Druckgas zum Anfahren der Turbine (22, 23) zu Beginn des Energieentladungsprozesses verwendet.

11. Das Energiespeichersystem nach einem der Ansprüche 6 bis 10, aufweisend mindestens zwei Energiespeichervorrichtungen (1', 1", 1"'), wobei eine erste Energiespeichervorrichtung (1', 1") in Reihe zwischen dem Verdichter (21; 21', 21") und der Turbine (22, 23) angeordnet ist, und wobei eine zweite Energiespeichervorrichtung (1", 1‴) in Reihe nach der Turbine (22, 23) oder nach einer ersten Druckstufe der Turbine (22, 23) angeordnet ist.

12. Das Energiespeichersystem nach Anspruch 11, aufweisend mehrere Turbinen (22, 23) und/oder die Turbine (22, 23) aufweisend mehrere Druckstufen, wobei das Energiespeichersystem zusätzlich mehr als zwei Energiespeichervorrichtungen (1', 1", 1‴) ausweist, und wobei die Turbinen (22, 23) und/oder die Druckstufen der Turbine (22, 23) derart in Reihe mit den Energiespeichervorrichtungen (1', 1", 1‴) angeordnet sind, dass jede der Turbinen (22, 23) und/oder jede der Druckstufen der Turbine (22, 23) zwischen zwei Energiespeichervorrichtungen (1', 1", 1‴) angeordnet ist.

13. Das Energiespeichersystem nach einem der Ansprüche 6 bis 12, wobei das Energiespeichersystem ein kombiniertes Kreislaufsystem ist mit einer Dampfturbine (82', 82"), die mit Dampf angetrieben werden kann, der mittels des von der Turbine (22, 23) ausgestossenen Gases erzeugt wird.

14. Das Energiespeichersystem nach einem der Ansprüche 6 bis 13, aufweisend mehrere Verdichtern (21', 21") und/oder der Verdichter (21) aufweisend mehrere Druckstufen, wobei das Energiespeichersystem zusätzlich ein Gefriergerät zur Erzeugung von Eis während des Energieladevorgangs und einen Zwischenkühler (3) zur Kühlung des Gases zwischen den Verdichtern (21', 21") oder zwischen den Druckstufen des Verdichters (21) mittels des Eises während des Energieentladevorgangs aufweist.

15. Das Energiespeichersystem nach einem der Ansprüche 6 bis 14, wobei der Verdichter (21; 21', 21") durch eine Turbine gebildet wird, die an der gleichen Welle (20) angebracht ist, an der auch die Turbine (22, 23) angebracht ist.

16. Ein Energiespeichersystem, aufweisend
mindestens eine Energiespeichervorrichtung (1) nach einem der Ansprüche 1 bis 5, mit einem Behälter (10), mit mindestens einem in dem Behälter (10) angeordneten thermischen Speicherelement (12) und mit einer oder mehreren elektrischen Heizeinrichtungen (13) zur Beheizung des mindestens einen thermischen Speicherelements (12) mittels elektrischer Energie während eines Energieladevorgangs,
einen Dampferzeuger (81, 92) zur Erzeugung von Dampf, um den erzeugten Dampf während des Energieladevorgangs in dem Behälter (10) der mindestens einen Energiespeichervorrichtung (1) zu speichern, und
eine Dampfturbine (82', 82") zur Erzeugung von elektrischer Energie mittels des im Behälter (10) gespeicherten Dampfes und der in dem mindestens einen thermischen Speicherelement (12) gespeicherten thermischen Energie in einem Energieentladevorgang.

## Revendications

1. Dispositif de stockage d'énergie (1; 1', 1", 1‴) comprenant
un réceptacle à gaz (10) pour stocker du gaz sous pression,
au moins un élément de stockage thermique (12) pour stocker de l'énergie thermique, et
un ou plusieurs dispositifs de chauffage électrique (13) pour chauffer l'au moins un élément de stockage thermique (12) au moyen d'énergie électrique,
**caractérisé en ce que**
l'au moins un élément de stockage thermique (12) et l'un ou plusieurs dispositifs de chauffage électrique (13) sont disposés à l'intérieur du réceptacle à gaz (10), de telle sorte que le gaz sous pression entoure l'au moins un élément de stockage thermique (12), lorsque le gaz sous pression est stocké dans le réceptacle à gaz (10).

2. Le dispositif de stockage d'énergie selon la revendication 1, dans lequel l'au moins un élément de stockage thermique (12) est en graphite à au moins 60 % en poids, de préférence à au moins 80 % en poids, plus préférablement à au moins 90 % en poids, et/ou est constitué de sable, de pierre ou de galets.

3. Le dispositif de stockage d'énergie selon la revendication 1 ou 2, dans lequel l'au moins un élément de stockage thermique (12) forme un système de phase à lacune de miscibilité et est en particulier constitué d'un alliage à lacune de miscibilité.

4. Le dispositif de stockage d'énergie selon l'une des revendications précédentes, comprenant une pluralité d'éléments de stockage thermique (12) et une pluralité de dispositifs de chauffage électrique (13), dans lequel chacun de ces dispositifs de chauffage électrique (13) est associé à l'un de ces éléments de stockage thermique (12).

5. Le dispositif de stockage d'énergie selon l'une des revendications 1 à 3, dans lequel un dispositif de chauffage électrique (13) sert à chauffer une pluralité d'éléments de stockage thermique (12).

6. Un système de stockage d'énergie comprenant
au moins un dispositif de stockage d'énergie (1; 1', 1", 1"') selon l'une des revendications précédentes, avec un réceptacle à gaz (10), avec au moins un élément de stockage thermique (12) disposé à l'intérieur du réceptacle à gaz (10) et avec un ou plusieurs dispositifs de chauffage électrique (13) pour chauffer l'au moins un élément de stockage thermique (12) au moyen d'énergie électrique pendant un processus de charge d'énergie,
un compresseur (21; 21', 21") pour la mise sous pression du gaz, afin de stocker le gaz sous pression dans le réceptacle à gaz (10) de l'au moins un dispositif de stockage d'énergie (1; 1', 1", 1‴) pendant le processus de chargement d'énergie , et
une turbine (22, 23) pour générer de l'énergie électrique au moyen du gaz sous pression stocké dans le réceptacle à gaz (10) et de l'énergie thermique stockée par l'au moins un élément de stockage thermique (12) dans un processus de décharge d'énergie.

7. Le système de stockage d'énergie selon la revendication 6, dans lequel le système de stockage d'énergie comprend un agencement en boucle fermée pour guider le gaz du compresseur (21 ; 21', 21") via le réceptacle à gaz (10) vers la turbine (22, 23) et de la turbine (22, 23) de retour au compresseur (21; 21', 21"), et dans lequel un gaz inerte est de préférence utilisé comme gaz à pressuriser n par le compresseur (21; 21', 21") et à stocker dans le réceptacle à gaz (10).

8. Le système de stockage d'énergie selon la revendication 6, dans lequel de l'air est utilisé comme gaz à pressuriser par le compresseur (21 ; 21' , 21") et à stocker dans le réceptacle à gaz (10), et dans lequel le système de stockage d'énergie comprend un agencement en boucle ouverte pour guider de l'air frais de l'atmosphère vers le compresseur (21; 21', 21"), afin d'être pressurisé par le compresseur (21; 21', 21") et d'être stocké sous forme d'air sous pression dans le réceptacle à gaz (10), et pour guider l'air sous pression du réceptacle à gaz (10) via la turbine (22, 23) de retour vers l'atmosphère.

9. Le système de stockage d'énergie selon l'une des revendications 6 à 8, dans lequel le système de stockage d'énergie est adapté pour fonctionner sans combustion.

10. Le système de stockage d'énergie selon l'une des revendications 6 à 9, dans lequel le système de stockage d'énergie est adapté pour utiliser du gaz sous pression stocké dans le réceptacle à gaz (10) pour démarrer la turbine (22, 23) au début du processus de déchargement de l'énergie.

11. Le système de stockage d'énergie selon l'une des revendications 6 à 10, comprenant au moins deux dispositifs de stockage d'énergie (1', 1", 1"), dans lequel un premier dispositif de stockage d'énergie (1', 1") est disposé en série entre le compresseur (21 ; 21', 21") et la turbine (22, 23), et dans lequel un deuxième dispositif de stockage d'énergie (1",1'") est disposé en série après la turbine (22, 23) ou après une première section de pression de la turbine (22, 23).

12. Le système de stockage d'énergie selon la revendication 11, comprenant plusieurs turbines (22, 23) et/ou la turbine (22, 23) comprenant plusieurs sections de pression, dans lequel le système de stockage d'énergie comprend en outre plus de deux dispositifs de stockage d'énergie (1', 1", 1‴), et dans lequel les turbines (22, 23) et/ou les sections de pression de la turbine (22, 23) sont disposées en série avec les dispositifs de stockage d'énergie (1', 1", 1"'), que chacune des turbines (22, 23) et/ou chacune des sections de pression de la turbine (22, 23) est disposée entre deux dispositifs de stockage d'énergie (1', 1", 1'").

13. Le système de stockage d'énergie selon l'une des revendications 6 à 12, dans lequel le système de stockage d'énergie est un système à cycle combiné avec une turbine à vapeur (82', 82") qui peut être entraînée par de la vapeur générée au moyen de gaz évacué par la turbine (22, 23).

14. Le système de stockage d'énergie selon l'une des revendications 6 à 13, comprenant plusieurs compresseurs (21', 21") et/ou le compresseur (21) comprenant plusieurs sections de pression, dans lequel le système de stockage d'énergie comprend en outre un congélateur pour générer de la glace pendant la processus de chargement d'énergie et un intercooler (3) pour refroidir le gaz entre les compresseurs (2 G, 21") ou entre les sections de pression du compresseur (21) au moyen de la glace pendant le processus de décharge de l'énergie.

15. Le système de stockage d'énergie selon l'une des revendications 6 à 14, dans lequel le compresseur (21 ; 21", 21") est formé par une turbine qui est fixée au même arbre (20) auquel également la turbine (22, 23) est attachée.

16. Un système de stockage d'énergie comprenant
au moins un accumulateur d'énergie (1) selon l'une des revendications 1 à 5, avec un réceptacle (10), avec au moins un élément de stockage thermique (12) disposé à l'intérieur du réceptacle (10) et avec un ou plusieurs dispositifs de chauffage électrique (13) pour chauffer l'au moins un élément de stockage thermique (12) au moyen d'énergie électrique pendant un processus de charge d'énergie,
un générateur de vapeur (81, 92) pour générer de la vapeur, afin de stocker la vapeur générée dans le réceptacle (10) de l'au moins un dispositif de stockage d'énergie (1) pendant le processus de chargement d'énergie, et
une turbine à vapeur (82', 82") pour générer de l'énergie électrique au moyen de la vapeur stockée dans le réceptacle (10) et de l'énergie thermique stockée par l'au moins un élément de stockage thermique (12) dans un processus de décharge de l'énergie.
